# EUROPÄISCHE PATENTANMELDUNG

(11) **EP 2 592 745 A1**
(43) Veröffentlichungstag der Anmeldung: **15.05.2013**
(21) Anmeldenummer: 12191729.8
(22) Anmeldetag: 08.11.2012
(51) Int. Cl.: H02M 5/458

(54) **Elektrischer Umrichter**

(30) Priorität: 10.11.2011 DE 102011086087
(71) Anmelder: GE Energy Power Conversion GmbH, 12277 Berlin (DE)
(72) Erfinder: Janning, Jörg, 12559 Berlin (DE)
(74) Vertreter: Dreiss

(57) **Zusammenfassung**

Es wird ein elektrischer Frequenzumrichter (20) zur Kopplung eines elektrischen Energieversorgungsnetzes (21) mit einem elektrischen Antrieb (22) beschrieben. Es sind ein Gleichrichter (23) und ein Wechselrichter (24) vorgesehen, wobei der Gleichrichter (23) mit dem Energieversorgungsnetz (21) und der Wechselrichter (24) mit dem Antrieb (22) verbunden ist. Der Gleichrichter (23) und der Wechselrichter (24) weisen jeweils mindestens zwei Serienschaltungen (25) auf, und jede der Serienschaltungen (25) weist mindestens zwei modulare Schalter (10) auf.

## Beschreibung

Die Erfindung betrifft ganz allgemein einen elektrischen Umrichter. Insbesondere betrifft die Erfindung einen elektrischen Frequenzumrichter sowie einen elektrischen Netzkupplungsumrichter. Derartige Umrichter sind allgemein bekannt und dienen zum Anschluss eines Antriebs an ein Energieversorgungsnetz oder zum Verbinden von zwei Energieversorgungsnetzen. Weiterhin ist es beispielsweise aus der DE 101 03 031 A1 bekannt, derartige Umrichter modular aufzubauen.

Aufgabe der Erfindung ist es, einen elektrischen Umrichter zu schaffen, der einen verbesserten modularen Aufbau besitzt.

Die Erfindung löst diese Aufgabe durch einen Frequenzumrichter nach einem der Ansprüche 1 oder 6, durch einen Umrichter nach dem Anspruch 10 sowie durch einen Netzkupplungsumrichter nach dem Anspruch 12.

Alle erfindungsgemäßen Umrichter weisen das gemeinsame Merkmal eines modularen Schalters auf, der eine erste Serienschaltung bestehend aus einem ersten steuerbaren Leistungshalbleiterbauelement und einer ersten Diode und eine zweite Serienschaltung bestehend aus einer zweiten Diode und einem zweiten steuerbaren Leistungshalbleiterbauelement aufweist, wobei der Verbindungspunkt des ersten Leistungshalbleiterbauelements und der ersten Diode einen ersten Anschluss und der Verbindungspunkt der zweiten Diode und des zweiten Leistungshalbleiterbauelements einen zweiten Anschluss des modularen Schalters bildet, wobei der modulare Schalter einen Kondensator aufweist, und wobei die erste Serienschaltung und die zweite Serienschaltung und der Kondensator zueinander parallel geschaltet sind.

Alle erfindungsgemäßen Umrichter weisen die weiteren gemeinsamen Merkmale auf, dass mindestens zwei derartige modulare Schalter eine Serienschaltung bilden, und dass mindestens zwei derartige Serienschaltungen zueinander parallelgeschaltet sind.

Durch diese gemeinsamen Merkmale wird durch die Erfindung die Möglichkeit geschaffen, die erfindungsgemäßen Umrichter auf einfache Weise an unterschiedliche Anwendungen anzupassen. Der modulare Aufbau der erfindungsgemäßen Umrichter ist dabei immer gleichartig. Nur durch die weitere Verschaltung wird der modulare Aufbau an die jeweils erwünschte Anwendung angepasst.

Auf diese Weise ist es möglich, den Aufwand und die Kosten für die erfindungsgemäßen Umrichter zu vermindern.

Weitere Merkmale, Anwendungsmöglichkeiten und Vorteile der Erfindung ergeben sich aus der nachfolgenden Beschreibung von Ausführungsbeispielen der Erfindung, die in den zugehörigen Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

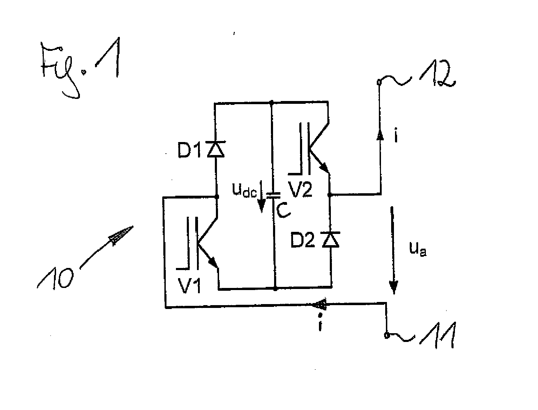

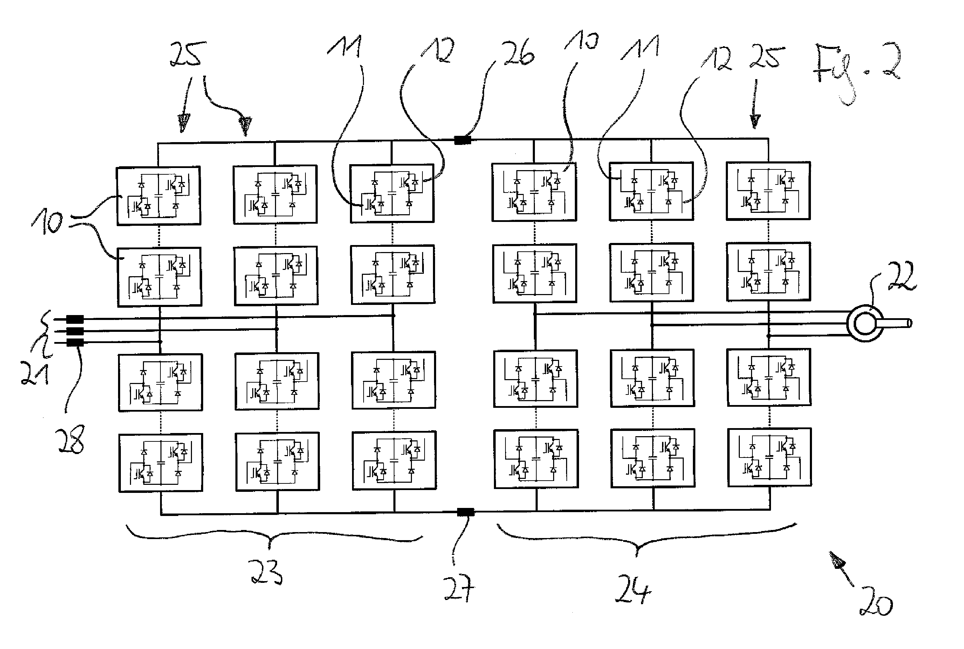

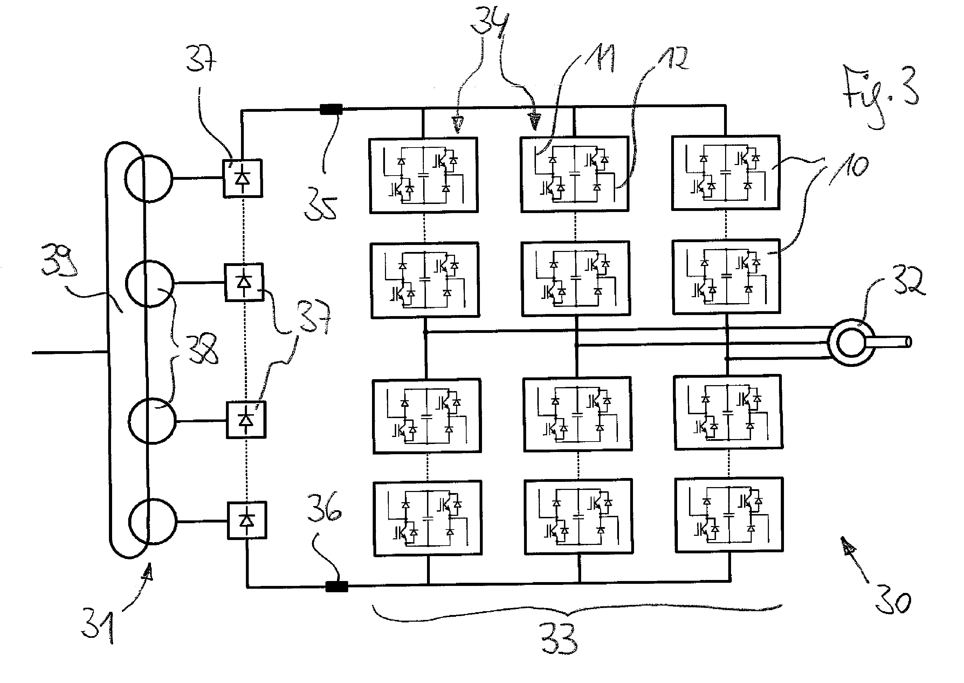

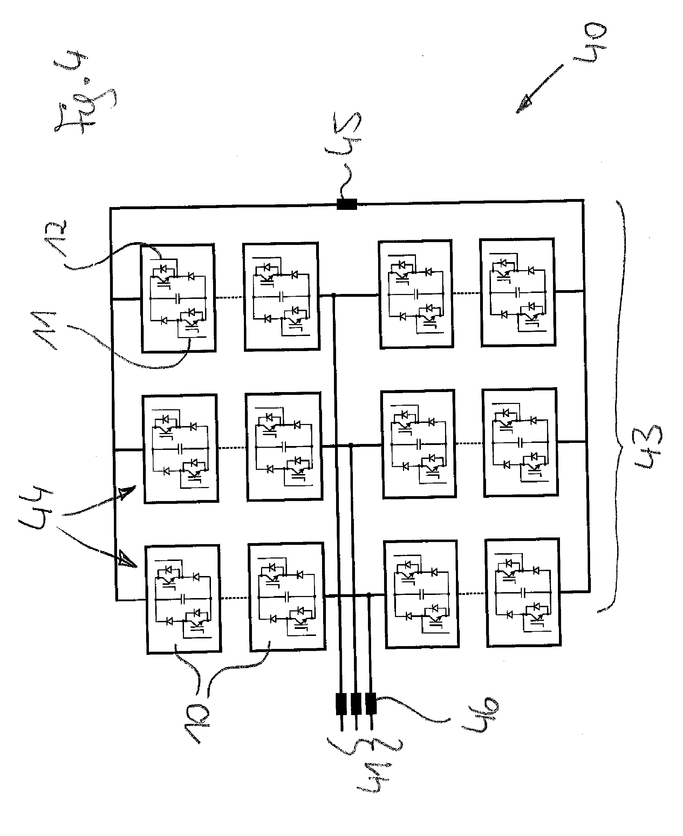

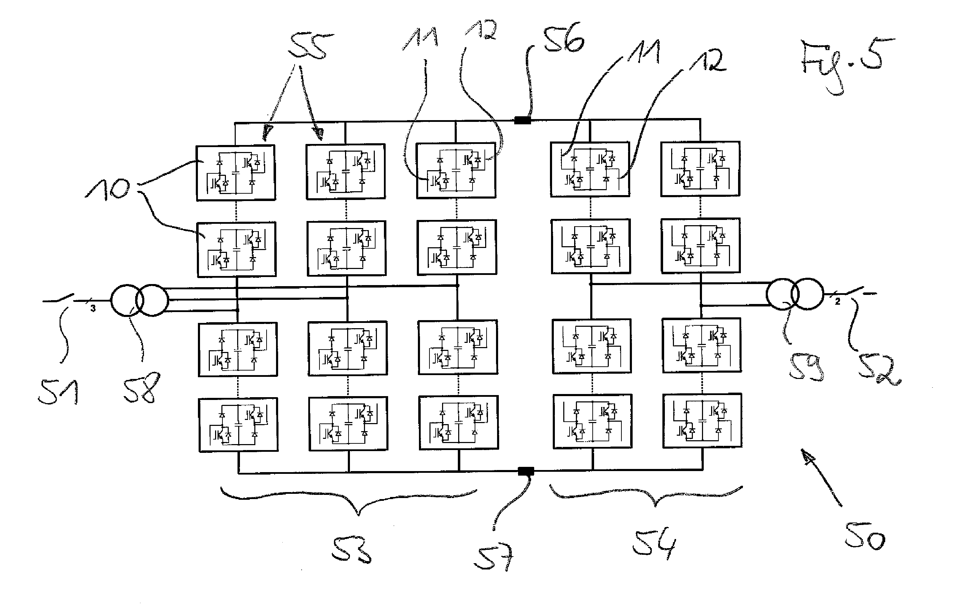

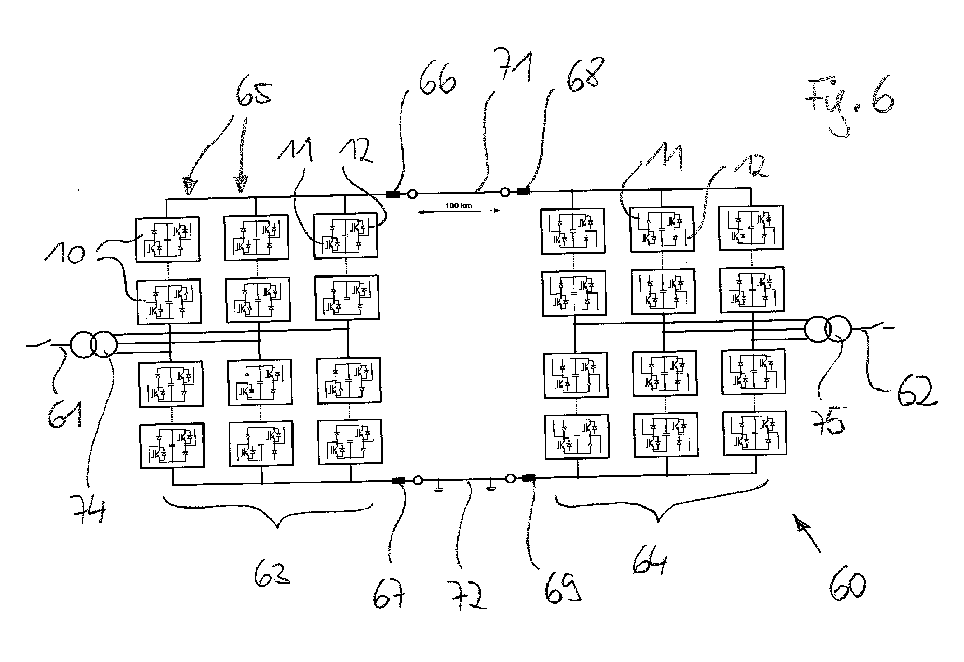

Figur 1 zeigt einen elektrischen Schaltplan eines Ausführungsbeispiels eines modularen Schalters, Figur 2 zeigt einen elektrischen Schaltplan eines Ausführungsbeispiels eines elektrischen Frequenzumrichters unter Verwendung des modularen Schalters der Figur 1, Figur 3 zeigt einen elektrischen Schaltplan eines Ausführungsbeispiels eines elektrischen Frequenzumrichters mit Diodeneinspeisung unter Verwendung des modularen Schalters der Figur 1, Figur 4 zeigt einen elektrischen Schaltplan eines Ausführungsbeispiels einer dynamischen Kompensation mit einem elektrischen Umrichter unter Verwendung des modularen Schalters der Figur 1, Figur 5 zeigt einen elektrischen Schaltplan eines Ausführungsbeispiels eines elektrischen Netzkupplungsumrichters unter Verwendung des modularen Schalters der Figur 1, und Figur 6 zeigt einen elektrischen Schaltplan eines Ausführungsbeispiels eines elektrischen Netzkupplungsumrichters mit Gleichstromübertragung unter Verwendung des modularen Schalters der Figur 1.

In der Figur 1 ist ein modularer Schalter 10 dargestellt, der zur Verwendung in einem elektrischen Umrichter oder einem elektrischen Stromrichter vorgesehen ist. Der modulare Schalter 10 ist auch in der nichtvorveröffentlichten deutschen Patentanmeldung 10 2010 046 142.3 beschrieben, auf die insoweit Bezug genommen wird.

Der modulare Schalter 10 weist eine erste Serienschaltung bestehend aus einem ersten steuerbaren Leistungshalbleiterbauelement V1 und einer ersten Diode D1 sowie eine zweite Serienschaltung bestehend aus einer zweiten Diode D2 und einem zweiten steuerbaren Leistungshalbleiterbauelement V2 auf.

Den beiden steuerbaren Leistungshalbleiterbauelementen V1, V2 kann jeweils eine gegensinnig geschaltete Freilaufdiode parallel geschaltet sein. Es wird aber ausdrücklich darauf hingewiesen, dass diese Freilaufdioden an sich für den Betrieb des modularen Schalters 10 nicht erforderlich sind, dass der modulare Schalter 10 also auch ohne diese Freilaufdioden vollständig funktionsfähig ist. In der Praxis wird man jedoch derartige Freilaufdioden zum Schutz der Leistungshalbleiterbauelemente V1, V2 vorsehen. Mit Hilfe der Freilaufdioden können mögliche Schäden an den Leistungshalbleiterbauelementen V1, V2 bei einer ungewollten Stromrichtungsumkehr des Stroms verhindert werden. Die Freilaufdioden können weiterhin Vorteile für die Schutzfunktionen des mit dem modularen Schalter 10 aufgebauten Umrichters haben. In den nachfolgend beschriebenen Figuren 2 bis 6 sind deshalb derartige Freilaufdioden vorhanden.

Den beiden steuerbaren Leistungshalbleiterbauelementen V1, V2 kann weiterhin jeweils eine gleichsinnig geschaltete Diode zum Zwecke der Erhöhung der Sperrfähigkeit in Gegenrichtung in Serie geschaltet sein.

Die Dimensionierung der Leistungshalbleiterbauelemente V1, V2 und der Dioden des modularen Schalters 10 kann unter Berücksichtigung der bei dem jeweiligen Anwendungsfall auftretenden Belastungen optimiert werden. Die Leistungshalbleiterbauelemente V1, V2 und die Dioden können dabei auch aus mehreren parallel und/oder in Serie geschalteten Bauelementen aufgebaut sein.

Bei der ersten Serienschaltung sind der Kollektor des ersten Leistungshalbleiterbauelements V1 und die Anode der ersten Diode D1 miteinander verbunden. Dieser Verbindungspunkt ist als erster Anschluss 11 bezeichnet. Bei der zweiten Serienschaltung sind der Emitter des zweiten Leistungshalbleiterbauelements V2 und die Kathode der zweiten Diode D2 miteinander verbunden. Dieser Verbindungspunkt ist als zweiter Anschluss 12 bezeichnet.

Die beiden Serienschaltungen sind zueinander parallel geschaltet. Damit ist die Kathode der ersten Diode D1 mit dem Kollektor des zweiten Leistungshalbleiterbauelements V2 und der Emitter des ersten Leistungshalbleiterbauelements V1 mit der Anode der zweiten Diode D2 verbunden.

Zu den beiden parallel geschalteten Serienschaltungen ist ein Kondensator C parallel geschaltet. Der Kondensator C kann auch als Kondensatorbank aus mehreren parallel und/oder in Serie geschalteten Kondensatoren aufgebaut sein.

An dem Kondensator C liegt eine Gleichspannung u_{dc} an und zwischen den beiden Anschlüssen 11, 12 ist eine Anschlussspannung uₐ vorhanden. Die Richtung der vorgenannten Spannungen ist in der Figur 1 angegeben. Weiterhin fließt von dem ersten Anschluss 11 ein Strom i in Richtung zu dem zweiten Anschluss 12.

Bei den Leistungshalbleiterbauelementen V1, V2 handelt es sich um steuerbare Schalter, beispielsweise um Transistoren, insbesondere Feldeffekttransistoren, oder um Thyristoren mit gegebenenfalls erforderlicher Hilfsbeschaltung, insbesondere GTO-Thyristoren (GTO = gate turn off), oder um IGBTs (IGBT = insulated gate bipolar transistor), oder um vergleichbare elektronische Bauelemente. In Abhängigkeit von der Ausgestaltung der Leistungshalbleiterbauelemente V1, V2 können die Anschlüsse derselben unterschiedliche Bezeichnungen haben. Die vorstehenden Bezeichnungen Kollektor und Emitter beziehen sich auf die beispielhafte Verwendung von IGBTs. Der Kondensator C kann unipolar ausgebildet sein.

Der modulare Schalter 10 kann vier Zustände einnehmen:
- Wenn die Leistungshalbleiterbauelemente V1, V2 beide ausgeschaltet (sperrend) sind, dann fließt der Strom i von dem ersten Anschluss 11 über die Diode D1, über den Kondensator C und über die Diode D2 zu dem zweiten Anschluss 12. Der Kondensator C wird von diesem Strom i geladen, so dass die Gleichspannung u_{dc} größer wird. Abgesehen von den Spannungsabfällen an den Dioden D1, D2 ist die Anschlussspannung uₐ gleich der negativen Gleichspannung -u_{dc}, also uₐ = -u_{dc}.
- Wenn die Leistungshalbleiterbauelemente V1, V2 beide eingeschaltet (leitend) sind, dann fließt der Strom i von dem ersten Anschluss 11 über das erste Leistungshalbleiterbauelement V1, über den Kondensator C und über das zweite Leistungshalbleiterbauelement V2 zu dem zweiten Anschluss 12. Der Kondensator C wird von diesem Strom i entladen, so dass die Gleichspannung u_{dc} kleiner wird. Abgesehen von den Spannungsabfällen an den Leistungshalbleiterbauelementen V1, V2 ist die Anschlussspannung uₐ gleich der positiven Gleichspannung u_{dc}, also uₐ = u_{dc}.
- Wenn das erste Leistungshalbleiterbauelement V1 eingeschaltet (leitend) und das zweite Leistungshalbleiterbauelement V2 ausgeschaltet (sperrend) ist, dann fließt der Strom i von dem ersten Anschluss 11 über das erste Leistungshalbleiterbauelement V1 und über die zweite Diode D2 zu dem zweiten Anschluss 12. Die Gleichspannung u_{dc} an dem Kondensator C bleibt konstant. Abgesehen von den Spannungsabfällen an dem ersten Leistungshalbleiterbauelement V1 und der zweiten Diode D2 ist die Anschlussspannung uₐ gleich Null, also uₐ = 0.
- Wenn das erste Leistungshalbleiterbauelement V1 ausgeschaltet (sperrend) und das zweite Leistungshalbleiterbauelement V2 eingeschaltet (leitend) ist, dann fließt der Strom i von dem ersten Anschluss 11 über die erste Diode D1 und das zweite Leistungshalbleiterbauelement V2 zu dem zweiten Anschluss 12. Die Gleichspannung u_{dc} an dem Kondensator C bleibt konstant. Abgesehen von den Spannungsabfällen an der ersten Diode D1 und dem zweiten Leistungshalbleiterbauelement V2 ist die Anschlussspannung uₐ gleich Null, also uₐ = 0.

Der Strom i durch den modularen Schalter 10 ist immer in dieselbe Richtung gerichtet. Diese Richtung ist dabei durch die Dioden D1, D2 vorgegeben. Die Anschlussspannung uₐ kann im Wesentlichen drei Werte annehmen, und zwar uₐ = -u_{dc} oder uₐ = u_{dc} oder uₐ = 0. Die Gleichspannung u_{dc} am Kondensator C kann größer oder kleiner werden.

Die beiden zuletzt erläuterten Zustände des modularen Schalters 10, bei denen die Anschlussspannung uₐ gleich Null ist, können zum Zwecke der Vergleichmäßigung der Belastung der Leistungshalbleiterbauelemente und Dioden genutzt werden.

In der Figur 2 ist ein elektrischer Frequenzumrichter 20 dargestellt, der zur Kopplung eines elektrischen Energieversorgungsnetzes 21 mit einem elektrischen Antrieb 22 vorgesehen ist.

Als elektrischer Antrieb 22 ist insbesondere ein Elektromotor vorgesehen. Es wird aber darauf hingewiesen, dass anstelle eines Elektromotors auch jegliche andere Art einer elektrischen, insbesondere elektromagnetischen Last vorhanden sein kann. Ebenfalls kann als Antrieb 22 auch ein Generator vorgesehen sein.

Der Frequenzumrichter 20 weist einen ersten Stromrichter 23 und einen zweiten Stromrichter 24 auf, die beide dreiphasig ausgebildet sind. Vorliegend wird davon ausgegangen, dass der elektrische Antrieb 22 von dem Energieversorgungsnetz 21 mit elektrischer Energie beaufschlagt wird. Der erste Stromrichter 23 hat deshalb eine gleichrichtende Funktion und wird nachfolgend auch als Gleichrichter bezeichnet und der zweite Stromrichter 24 hat eine wechselrichtende Funktion und wird deshalb auch als Wechselrichter bezeichnet.

Bei den beiden Stromrichtern 23, 24 handelt es sich um Multi-Level- oder Mehrpunkt-Stromrichter, die im vorliegenden Fall fünf Arbeitspunkte besitzen. Es versteht sich, dass die beiden Stromrichter 23, 24 auch mit mehr oder weniger Arbeitspunkten und/oder mit einer unterschiedlichen Anzahl von Arbeitspunkten ausgestattet sein können. Weiterhin versteht es sich, dass die beiden Stromrichter 23, 24 auch mehr oder weniger Phasen aufweisen können, und dass die beiden Stromrichter 23, 24 auch eine unterschiedliche Anzahl von Phasen aufweisen können.

Vorliegend sind die beiden Stromrichter 23, 24 jeweils aus drei parallelgeschalteten Serienschaltungen 25 aufgebaut, wobei jede der Serienschaltungen 25 aus vier in Serie geschalteten modularen Schaltern 10 besteht. Bei dem Stromrichter 23 ist der Anschluss 11 von jedem der Schalter 10 mit dem Anschluss 12 des jeweils darunter angeordneten Schalters 10 verbunden. Bei dem Stromrichter 24 ist der Anschluss 12 von jedem der Schalter 10 mit dem Anschluss 11 des jeweils darunter angeordneten Schalters 10 verbunden.

Weiterhin sind die Anschlüsse 12 der ersten, obersten Schalter 10 des Gleichrichters 23 mit dem einen Anschluss einer Zwischenkreisinduktivität 26 und die Anschlüsse 11 der vierten, untersten Schalter 10 mit einen Anschluss einer Zwischenkreisinduktivität 27 verbunden. In entsprechender Weise sind die Anschlüsse 12, 11 der ersten, obersten und der vierten, untersten Schalter 10 des Wechselrichters 24 mit dem jeweils anderen Anschluss der Zwischenkreisinduktivitäten 26, 27 verbunden.

Zwischen den beiden Zwischenkreisinduktivitäten 26, 27 liegt eine Zwischenkreis-Gleichspannung an, über die der Verlauf des zugehörigen Zwischenkreisstroms einstellbar ist. Es wird darauf hingewiesen, dass gegebenenfalls auch nur eine der beiden Zwischenkreisinduktivitäten 26, 27 vorhanden sein kann.

Der Verbindungspunkt der beiden mittleren Schalter 10 jeder der drei Serienschaltungen 25 des Gleichrichters 23 ist über jeweils eine Induktivität 28 mit einer der drei Phasen des Energieversorgungsnetzes 21 verbunden.

Alternativ können die drei Induktivitäten 28 auch in der Form eines Transformators ausgebildet sein, gegebenenfalls auch als sogenannte offene Transformator-Wicklungen. Im letztgenannten Fall kann eine Anpassung des Gleichrichters 23 erforderlich sein.

Der Verbindungspunkt der beiden mittleren Schalter 10 jeder der drei Serienschaltungen 25 des Wechselrichters 24 ist mit einer der drei Phasen des elektrischen Antriebs 22 verbunden. Dabei wird insbesondere davon ausgegangen, dass der elektrische Antrieb 22 phasenbezogene Induktivitäten aufweist. Bei einem Elektromotor kann es sich dabei um die Wicklungen desselben handeln.

Wie erläutert wurde, kann die Anschlussspannung uₐ jedes modularen Schalters 10 im Wesentlichen drei Zustände einnehmen: uₐ = -u_{dc} oder uₐ = udc oder uₐ = 0. Damit kann die Spannung jeder Phase des elektrischen Antriebs 22 im Wesentlichen fünf Zustände einnehmen, und zwar: -2u_{dc} oder -u_{dc} oder 0 oder u_{dc} oder 2u_{dc}.

Durch eine entsprechende Ansteuerung der Leistungshalbleiterbauelemente V1, V2 der einzelnen modularen Schalter 10 des Gleichrichters 24 wird die eine erste Frequenz aufweisende Wechselspannung des Energieversorgungsnetzes 21 in die Zwischenkreis-Gleichspannung umgewandelt. Durch eine entsprechende Ansteuerung der Leistungshalbleiterbauelemente V1, V2 der einzelnen modularen Schalter 10 des Wechselrichters 25 wird die Zwischenkreis-Gleichspannung in eine an dem Antrieb 22 anliegende Wechselspannung mit einer vorgebbaren zweiten Frequenz umgewandelt.

Wie bereits erwähnt, kann es sich bei dem elektrischen Antrieb 22 auch um einen Generator handeln. In diesem Fall erfolgt eine Rückspeisung, bei der der zweite Stromrichter 24 eine gleichrichtende Funktion und der erste Stromrichter 23 eine wechselrichtende Funktion besitzt. Die Zwischenkreisspannung wechselt ihr Vorzeichen. Durch eine entsprechende Ansteuerung der Leistungshalbleiterbauelemente V1, V2 der einzelnen modularen Schalter 10 der beiden Stromrichter 23, 24 wird eine von dem Generator erzeugte Wechselspannung mit einer ersten Frequenz in eine an dem Energieversorgungsnetz 21 vorhandene Wechselspannung mit einer vorgebbaren zweiten Frequenz umgewandelt.

Bei dem Frequenzumrichter 20 der Figur 2 handelt es sich um einen Fünfpunkt-Umrichter. Für einen Dreipunkt-Umrichter sind im Unterschied zur Figur 2 nur zwei modulare Schalter 10 bei jeder der Serienschaltungen 25 des Gleichrichters 23 und des Wechselrichters 24 erforderlich.

In der Figur 3 ist ein elektrischer Frequenzumrichter 30 dargestellt, der zur Kopplung eines elektrischen Transformators 31 mit einem elektrischen Antrieb 32 vorgesehen ist.

Als elektrischer Antrieb 32 ist insbesondere ein Elektromotor vorgesehen. Es wird aber darauf hingewiesen, dass anstelle eines Elektromotors auch jegliche andere Art einer elektrischen, insbesondere elektromagnetischen Last vorhanden sein kann.

Der Frequenzumrichter 30 weist einen Wechselrichter 33 auf, der aus drei parallelgeschalteten Serienschaltungen 34 aufgebaut ist, wobei jede der Serienschaltungen 34 aus vier in Serie geschalteten modularen Schaltern 10 besteht. Der Anschluss 12 von jedem der Schalter 10 ist mit dem Anschluss 11 des jeweils darunter angeordneten Schalters 10 verbunden.

Der Wechselrichter 33 ist dreiphasig ausgebildet. Es versteht sich, dass der Wechselrichter 33 auch mehr oder weniger Phasen aufweisen kann.

Bei dem Wechselrichter 33 handelt es sich um einen Multi-Level- oder Mehrpunkt-Umrichter, der im vorliegenden Fall fünf Arbeitspunkte besitzt. Es versteht sich, dass der Wechselrichter 33 auch mit mehr oder weniger Arbeitspunkten ausgestattet sein kann.

Weiterhin sind die Anschlüsse 11 der ersten, obersten Schalter 10 des Wechselrichters 33 mit dem einen Anschluss einer Zwischenkreisinduktivität 35 und die Anschlüsse 12 der vierten, untersten Schalter 10 mit dem einen Anschluss einer Zwischenkreisinduktivität 36 verbunden.

Der jeweils andere Anschluss der Zwischenkreisinduktivitäten 35, 36 ist mit einer Serienschaltung einer Anzahl von Gleichrichtern 37 verbunden. Die Serienschaltung der Gleichrichter 37 ist damit zu den Serienschaltungen 34 des Wechselrichters 33 parallelgeschaltet.

Es wird darauf hingewiesen, dass gegebenenfalls auch nur eine der beiden Zwischenkreisinduktivitäten 35, 36 vorhanden sein kann.

Vorliegend sind vier Gleichrichter 37 vorhanden. Es versteht sich, dass diese Anzahl auch kleiner oder größer sein kann.

Jeder der in Serie geschalteten Gleichrichter 37 ist mit einer sekundärseitigen Wicklung 38 des Transformators 31 verbunden. Vorliegend sind also vier sekundärseitige Wicklungen vorhanden. Weiterhin weist der Transformator 31 eine primärseitige Wicklung 39 auf, die beispielsweise mit einem Energieversorgungsnetz verbunden sein kann.

Der Transformator 31 ist insbesondere dreiphasig ausgebildet, kann aber auch eine größere oder kleinere Anzahl von Phasen aufweisen.

Bei den Gleichrichtern 37 kann es sich jeweils um jegliche Art einer elektrischen Schaltung handeln, mit der eine sogenannte Diodeneinspeisung durchführbar ist.

So ist es möglich, dass es sich bei den Gleichrichtern 37 um Brückengleichrichter handelt, beispielsweise um sogenannte B2-Gleichrichter. Bei einem B2-Gleichrichter sind jeweils zwei gleichsinnig in Serie geschaltete Dioden zueinander parallelgeschaltet und die Verbindungspunkte der jeweiligen beiden Dioden sind mit jeweils einem der beiden Anschlusspunkte der zugehörigen sekundärseitigen Wicklung verbunden. Die Anschlusspunkte der beiden Serienschaltungen bilden dann die Anschlusspunkte des B2-Gleichrichters.

Ebenfalls ist es möglich, dass es sich bei den Gleichrichtern 37 um Dreiphasen-Gleichrichter handelt, beispielsweise um sogenannte B6-Gleichrichter. Es versteht sich, dass auch jegliche andere Arten von Gleichrichtern zur Anwendung kommen können, beispielsweise halb- oder vollgesteuerte Brücken oder dergleichen.

Alternativ können auch Thyristorbrücken zum Einsatz kommen, beispielsweise eine sogenannte B6-Thyristorbrücke. Mit derartigen Thyristorbrücken ist eine Umkehrung des Energieflusses, also eine sogenannte Rückspeisung möglich.

Der Verbindungspunkt der beiden mittleren Schalter 10 jeder der drei Serienschaltungen 34 des Wechselrichters 33 ist mit einer der drei Phasen des elektrischen Antriebs 32 verbunden. Dabei wird insbesondere davon ausgegangen, dass der elektrische Antrieb 32 phasenbezogene Induktivitäten aufweist. Bei einem Elektromotor kann es sich dabei um die Wicklungen desselben handeln.

Wie erläutert wurde, kann die Anschlussspannung uₐ jedes modularen Schalters 10 im Wesentlichen drei Zustände einnehmen: uₐ = -u_{dc} oder uₐ = udc oder uₐ = 0. Damit kann die Spannung jeder Phase des elektrischen Antriebs 32 im Wesentlichen fünf Zustände einnehmen, und zwar: -2u_{dc} oder -u_{dc} oder 0 oder u_{dc} oder 2u_{dc}.

Ausgehend von dem Transformator 31, an dem eine Wechselspannung mit einer ersten Frequenz anliegt, entsteht mit Hilfe der Gleichrichter 37 zwischen den Zwischenkreisinduktivitäten 35, 36 eine Zwischenkreis-Gleichspannung.

Damit kann durch eine entsprechende Ansteuerung der Leistungshalbleiterbauelemente V1, V2 der einzelnen modularen Schalter 10 des Wechselrichters 33 eine über den Transformator 31 vorgegebene Zwischenkreis-Gleichspannung in eine an dem Antrieb 32 anliegende Wechselspannung mit einer vorgebbaren zweiten Frequenz umgewandelt werden.

Bei dem Frequenzumrichter 30 der Figur 3 handelt es sich um einen Fünfpunkt-Umrichter. Für einen Dreipunkt-Umrichter sind im Unterschied zur Figur 3 nur zwei modulare Schalter 10 bei jeder der Serienschaltungen 34 des Wechselrichters 33 erforderlich.

In der Figur 4 ist ein elektrischer Umrichter 40 dargestellt, der zur Kopplung eines elektrischen Energieversorgungsnetzes 41 mit einer elektrischen Kompensation vorgesehen ist.

Der Umrichter 40 weist einen Gleichrichter 43 auf, der aus drei parallelgeschalteten Serienschaltungen 44 aufgebaut ist, wobei jede der Serienschaltungen 44 aus vier in Serie geschalteten modularen Schaltern 10 besteht. Der Anschluss 11 von jedem der Schalter 10 ist mit dem Anschluss 12 des jeweils darunter angeordneten Schalters 10 verbunden.

Der Gleichrichter 43 ist dreiphasig ausgebildet. Es versteht sich, dass der Gleichrichter 43 auch mehr oder weniger Phasen aufweisen kann.

Bei dem Gleichrichter 43 handelt es sich um einen Multi-Level- oder Mehrpunkt-Umrichter, der im vorliegenden Fall fünf Arbeitspunkte besitzt. Es versteht sich, dass der Gleichrichter 43 auch mit mehr oder weniger Arbeitspunkten ausgestattet sein kann.

Weiterhin sind die Anschlüsse 12 der ersten, obersten Schalter 10 des Gleichrichters 43 mit dem einen Anschluss einer Induktivität 45 und die Anschlüsse 11 der vierten, untersten Schalter 10 mit dem anderen Anschluss der Induktivität 45 verbunden. An der Induktivität 45 liegt eine Gleichspannung an.

Mit Hilfe der an den Zwischenkreis angeschlossenen Induktivität 45 wird erreicht, dass der Umrichter 40 für die dynamische Kompensation von Blindleistung in dem Energieversorgungsnetz 41 eingesetzt werden kann. Der Strom fließt nur in einer Richtung durch die Induktivität 45. Die Spannung an der Induktivität 45 kann mit Hilfe des Umrichters 40 positiv oder negativ eingestellt und zur Stromregelung verwendet werden.

Der Verbindungspunkt der beiden mittleren Schalter 10 jeder der drei Serienschaltungen 44 des Gleichrichters 43 ist über jeweils eine Induktivität 46 mit einer der drei Phasen des Energieversorgungsnetzes 41 verbunden.

Alternativ können die drei Induktivitäten 46 auch in der Form eines Transformators ausgebildet sein, gegebenenfalls auch als sogenannte offene Transformator-Wicklungen. Im letztgenannten Fall kann eine Anpassung des Gleichrichters 43 erforderlich sein.

Durch eine entsprechende Ansteuerung der Leistungshalbleiterbauelemente V1, V2 der einzelnen modularen Schalter 10 des Gleichrichters 43 wird die Wechselspannung des Energieversorgungsnetzes 41 in die an der Induktivität 45 anliegende Gleichspannung umgewandelt.

Bei dem Umrichter 40 der Figur 4 handelt es sich um einen Fünfpunkt-Umrichter. Für einen Dreipunkt-Umrichter sind im Unterschied zur Figur 4 nur zwei modulare Schalter 10 bei jeder der Serienschaltungen 44 des Gleichrichters 43 erforderlich.

In der Figur 5 ist ein elektrischer Netzkupplungsumrichter 50 dargestellt, der zur Kopplung zweier elektrischer Energieversorgungsnetze 51, 52 mit unterschiedlicher Phasenanzahl vorgesehen ist.

Beispielsweise kann es sich bei dem ersten Energieversorgungsnetz 51 um das übliche, dreiphasige Verbrauchernetz und bei dem zweiten Energieversorgungsnetz 52 um das zweiphasige Bahnnetz handeln. Das Verbrauchernetz besitzt dabei üblicherweise eine erste Frequenz von 50 Hz und das Bahnnetz üblicherweise eine zweite Frequenz von 16,7 Hz.

Der Netzkupplungsumrichter 50 weist einen ersten Stromrichter 53 und einen zweiten Stromrichter 54 auf. Vorliegend wird davon ausgegangen, dass das zweite Energieversorgungsnetz 52 von dem ersten Energieversorgungsnetz 51 mit elektrischer Energie versorgt wird. Der erste Stromrichter 53 hat deshalb eine gleichrichtende Funktion und wird nachfolgend auch als Gleichrichter bezeichnet und der zweite Stromrichter 54 hat eine wechselrichtende Funktion und wird deshalb auch als Wechselrichter bezeichnet.

Der Gleichrichter 53 und der Wechselrichter 54 weisen eine unterschiedliche Anzahl von Phasen auf. Der Gleichrichter 53 ist vorliegend dreiphasig und der Wechselrichter 54 ist vorliegend zweiphasig ausgebildet. Es versteht sich, dass der Gleichrichter 53 und/oder der Wechselrichter 54 auch mehr oder weniger Phasen aufweisen können.

Bei den beiden Stromrichter 53, 54 handelt es sich um Multi-Level- oder Mehrpunkt-Umrichter, die im vorliegenden Fall fünf Arbeitspunkte besitzt. Es versteht sich, dass die beiden Stromrichter 53, 54 auch mit mehr oder weniger Arbeitspunkten und/oder mit einer unterschiedlichen Anzahl von Arbeitspunkten ausgestattet sein können.

Die beiden Stromrichter 53, 54 sind jeweils aus parallelgeschalteten Serienschaltungen 55 aufgebaut, wobei die Anzahl der Serienschaltungen 55 jeweils der Anzahl der zugehörigen Phasen entspricht. Jede der Serienschaltungen 55 besteht aus vier in Serie geschalteten modularen Schaltern 10. Bei dem Stromrichter 53 ist der Anschluss 11 von jedem der Schalter 10 mit dem Anschluss 12 des jeweils darunter angeordneten Schalters 10 verbunden. Bei dem Stromrichter 54 ist der Anschluss 12 von jedem der Schalter 10 mit dem Anschluss 11 des jeweils darunter angeordneten Schalters 10 verbunden.

Weiterhin sind die Anschlüsse 12 der ersten, obersten Schalter 10 des Gleichrichters 53 mit dem einen Anschluss einer Zwischenkreisinduktivität 56 und die Anschlüsse 11 der vierten, untersten Schalter 10 mit dem einen Anschluss einer Zwischenkreisinduktivität 57 verbunden. In entsprechender Weise sind die Anschlüsse 12, 11 der ersten, obersten und der vierten, untersten Schalter 10 des Wechselrichters 54 mit dem jeweils anderen Anschluss der Zwischenkreisinduktivitäten 56, 57 verbunden.

Zwischen den beiden Zwischenkreisinduktivitäten 56, 57 liegt eine Zwischenkreis-Gleichspannung an. Es wird darauf hingewiesen, dass gegebenenfalls auch nur eine der beiden Zwischenkreisinduktivitäten 56, 57 vorhanden sein kann.

Der Verbindungspunkt der beiden mittleren Schalter 10 jeder der drei Serienschaltungen 55 des Gleichrichters 53 ist mit einer der drei Phasen des ersten Energieversorgungsnetzes 51 verbunden. Diese Verbindung kann über einen Transformator 58 erfolgen oder gegebenenfalls auch über entsprechende Induktivitäten.

Der Verbindungspunkt der beiden mittleren Schalter 10 jeder der zwei Serienschaltungen 55 des Wechselrichters 54 ist mit einer der zwei Phasen des zweiten Energieversorgungsnetzes 52 verbunden. Diese Verbindung kann über einen Transformator 59 erfolgen oder gegebenenfalls auch über entsprechende Induktivitäten.

Gegebenenfalls kann auch nur einer der beiden Transformatoren 58, 59 vorhanden sein.

Wie erläutert wurde, kann die Anschlussspannung uₐ jedes modularen Schalters 10 im Wesentlichen drei Zustände einnehmen: uₐ = -u_{dc} oder uₐ = udc oder uₐ = 0. Damit kann die Spannung jeder Phase im Wesentlichen fünf Zustände einnehmen, und zwar: -2u_{dc} oder -u_{dc} oder 0 oder u_{dc} oder 2u_{dc}.

Durch eine entsprechende Ansteuerung der Leistungshalbleiterbauelemente V1, V2 der einzelnen modularen Schalter 10 des Gleichrichters 53 wird die eine erste Frequenz aufweisende Wechselspannung des ersten Energieversorgungsnetzes 51 in die Zwischenkreis-Gleichspannung umgewandelt. Durch eine entsprechende Ansteuerung der Leistungshalbleiterbauelemente V1, V2 der einzelnen modularen Schalter 10 des Wechselrichters 54 wird die Zwischenkreis-Gleichspannung in eine Wechselspannung mit einer vorgebbaren zweiten Frequenz für das zweite Energieversorgungsnetz 52 umgewandelt.

Es wird darauf hingewiesen, dass bei dem Netzkupplungsumrichter 50 auch ein Energiefluss in umgekehrter Richtung erfolgen kann. In diesem Fall erfolgt eine Rückspeisung, bei der der zweite Stromrichter 54 eine gleichrichtende Funktion und der erste Stromrichter 53 eine wechselrichtende Funktion besitzt. Die Zwischenkreisspannung wechselt ihr Vorzeichen. Durch eine entsprechende Ansteuerung der Leistungshalbleiterbauelemente V1, V2 der einzelnen modularen Schalter 10 der beiden Stromrichter 53, 54 wird eine an dem zweiten Energieversorgungsnetz 52 vorhandene Wechselspannung mit einer ersten Frequenz in eine an dem ersten Energieversorgungsnetz 51 vorhandene Wechselspannung mit einer vorgebbaren zweiten Frequenz umgewandelt.

Bei dem Netzkupplungsumrichter 50 der Figur 5 handelt es sich um einen Fünfpunkt-Umrichter. Für einen Dreipunkt-Umrichter sind im Unterschied zur Figur 5 nur zwei modulare Schalter 10 bei jeder der Serienschaltungen 55 des Gleichrichters 53 und des Wechselrichters 54 erforderlich.

In der Figur 6 ist ein elektrischer Netzkupplungsumrichter 60 dargestellt, der zur Kopplung zweier elektrischer Energieversorgungsnetze 61, 62 mit dazwischen angeordneter Gleichstromübertragung vorgesehen ist.

Der Netzkupplungsumrichter 60 weist einen ersten Stromrichter 63 und einen zweiten Stromrichter 64 auf. Vorliegend wird davon ausgegangen, dass das zweite Energieversorgungsnetz 62 von dem ersten Energieversorgungsnetz 61 mit elektrischer Energie versorgt wird. Der erste Stromrichter 63 hat deshalb eine gleichrichtende Funktion und wird nachfolgend auch als Gleichrichter bezeichnet und der zweite Stromrichter 64 hat eine wechselrichtende Funktion und wird deshalb auch als Wechselrichter bezeichnet.

Der beiden Stromrichter 63, 64 weisen dieselbe Anzahl von Phasen auf. Der Gleichrichter 63 und der Wechselrichter 64 sind vorliegend dreiphasig ausgebildet. Es versteht sich, dass der Gleichrichter 63 und/oder der Wechselrichter 64 auch mehr oder weniger Phasen aufweisen können und auch eine unterschiedliche Anzahl von Phasen aufweisen können. Bei den beiden Stromrichter 63, 64 handelt es sich um Multi-Level- oder Mehrpunkt-Umrichter, die im vorliegenden Fall fünf Arbeitspunkte besitzt. Es versteht sich, dass die beiden Stromrichter 63, 64 auch mit mehr oder weniger Arbeitspunkten und/oder mit einer unterschiedlichen Anzahl von Arbeitspunkten ausgestattet sein können.

Vorliegend sind der Gleichrichter 63 und der Wechselrichter 64 jeweils aus parallelgeschalteten Serienschaltungen 65 aufgebaut, wobei die Anzahl der Serienschaltungen 65 jeweils der Anzahl der zugehörigen Phasen entspricht. Jede der Serienschaltungen 65 besteht aus vier in Serie geschalteten modularen Schaltern 10. Bei dem Gleichrichter 63 ist der Anschluss 11 von jedem der Schalter 10 mit dem Anschluss 12 des jeweils darunter angeordneten Schalters 10 verbunden. Bei dem Wechselrichter 64 ist der Anschluss 12 von jedem der Schalter 10 mit dem Anschluss 11 des jeweils darunter angeordneten Schalters verbunden.

Weiterhin sind die Anschlüsse 12 der ersten, obersten Schalter 10 des Gleichrichters 63 mit einem Anschluss einer Induktivität 66 und die Anschlüsse 11 der vierten, untersten Schalter 10 mit einem Anschluss einer Induktivität 67 verbunden. In entsprechender Weise sind die Anschlüsse 12, 11 der ersten, obersten und der vierten, untersten Schalter 10 des Wechselrichters 64 mit jeweils einem Anschluss einer Induktivität 68, 69 verbunden.

Der andere Anschluss der Induktivität 66 ist über eine elektrische Leitung 71 mit dem anderen Anschluss der Induktivität 68 verbunden und der andere Anschluss der Induktivität 67 ist über eine elektrische Leitung 72 mit dem anderen Anschluss der Induktivität 69 verbunden. Zwischen den beiden elektrischen Leitungen 71, 72 liegt eine Gleichspannung an. Es handelt sich dabei insbesondere um eine Hochspannung, beispielsweise 150 kV. Die Länge der beiden Leitungen kann mehrere Kilometer, beispielsweise 100 km betragen. Eine der beiden Leitungen 71, 72 kann geerdet sein. Auf diese Weise wird eine Gleichstromübertragung realisiert.

Es wird darauf hingewiesen, dass jeder der beiden Leitungen 71, 72 gegebenenfalls auch nur eine der beiden Induktivitäten 66, 68 bzw. 67, 69 zugeordnet sein kann. Gegebenenfalls können die Induktivitäten 66, 68, 67, 69 auch vollständig entfallen, wenn die Eigeninduktivitäten der elektrischen Leitungen 71, 72 ausreichend groß sind.

Der Verbindungspunkt der beiden mittleren Schalter 10 jeder der drei Serienschaltungen 65 des Gleichrichters 63 ist mit einer der drei Phasen des ersten Energieversorgungsnetzes 61 verbunden. Diese Verbindung kann über einen Transformator 74 erfolgen oder gegebenenfalls auch über entsprechende Induktivitäten.

Der Verbindungspunkt der beiden mittleren Schalter 10 jeder der drei Serienschaltungen 65 des Wechselrichters 64 ist mit einer der drei Phasen des zweiten Energieversorgungsnetzes 62 verbunden. Diese Verbindung kann über einen Transformator 75 erfolgen oder gegebenenfalls auch über entsprechende Induktivitäten.

Gegebenenfalls kann auch nur einer der beiden Transformatoren 74, 75 vorhanden sein.

Wie erläutert wurde, kann die Anschlussspannung uₐ jedes modularen Schalters 10 im Wesentlichen drei Zustände einnehmen: uₐ = -u_{dc} oder uₐ = udc oder uₐ = 0. Damit kann die Spannung jeder Phase im Wesentlichen fünf Zustände einnehmen, und zwar: -2u_{dc} oder -u_{dc} oder 0 oder u_{dc} oder 2u_{dc}.

Durch eine entsprechende Ansteuerung der Leistungshalbleiterbauelemente V1, V2 der einzelnen modularen Schalter 10 des Gleichrichters 63 wird die eine erste Frequenz aufweisende Wechselspannung des ersten Energieversorgungsnetzes 61 in die Gleichspannung umgewandelt. Diese Gleichspannung bzw. der zugehörige Gleichstrom wird dann über die Leitungen 71, 72 übertragen. Durch eine entsprechende Ansteuerung der Leistungshalbleiterbauelemente V1, V2 der einzelnen modularen Schalter 10 des Wechselrichters 64 wird die Gleichspannung in eine Wechselspannung mit einer vorgebbaren zweiten Frequenz für das zweite Energieversorgungsnetz 62 umgewandelt.

Es wird darauf hingewiesen, dass bei dem Netzkupplungsumrichter 60 auch ein Energiefluss in umgekehrter Richtung erfolgen kann. In diesem Fall erfolgt eine Rückspeisung, bei der der zweite Stromrichter 64 eine gleichrichtende Funktion und der erste Stromrichter 63 eine wechselrichtende Funktion ausübt. Durch eine entsprechende Ansteuerung der Leistungshalbleiterbauelemente V1, V2 der einzelnen modularen Schalter 10 der beiden Stromrichter 63, 64 wird eine an dem zweiten Energieversorgungsnetz 62 vorhandene Wechselspannung mit einer ersten Frequenz in eine Gleichspannung umgewandelt und über die Leitungen 71, 72 über tragen, um dann in eine an dem ersten Energieversorgungsnetz 61 vorhandene Wechselspannung mit einer vorgebbaren zweiten Frequenz umgewandelt.

Bei dem Netzkupplungsumrichter 60 der Figur 6 handelt es sich um einen Fünfpunkt-Umrichter. Für einen Dreipunkt-Umrichter sind im Unterschied zur Figur 6 nur zwei modulare Schalter 10 bei jeder der Serienschaltungen 65 des Gleichrichters 63 und des Wechselrichters 64 erforderlich.

Weiterhin wird darauf hingewiesen, dass der Netzkupplungsumrichter 60 der Figur 6 auch ohne die elektrischen Leitungen 71, 72 vorgesehen sein können. In diesem Fall stellt der Netzkupplungsumrichter 60 eine sogenannte Kurzkupplung dar.

## Patentansprüche

1. Elektrischer Frequenzumrichter (20) zur Kopplung eines elektrischen Energieversorgungsnetzes (21) mit einem elektrischen Antrieb (22), mit einem ersten Stromrichter (23) und einem zweiten Stromrichter (24), wobei der erste Stromrichter (23) mit dem Energieversorgungsnetz (21) und der zweite Stromrichter (24) mit dem Antrieb (22) verbunden ist, wobei jeder der beiden Stromrichter (23, 24) mindestens zwei Serienschaltungen (25) aufweist, wobei jede der Serienschaltungen (25) mindestens zwei modulare Schalter (10) aufweist, wobei jeder der modularen Schalter (10) eine erste Serienschaltung bestehend aus einem ersten steuerbaren Leistungshalbleiterbauelement (V1) und einer ersten Diode (D1) und eine zweite Serienschaltung bestehend aus einer zweiten Diode (D2) und einem zweiten steuerbaren Leistungshalbleiterbauelement (V2) aufweist, wobei der Verbindungspunkt des ersten Leistungshalbleiterbauelements (V1) und der ersten Diode (D1) einen ersten Anschluss (11) und der Verbindungspunkt der zweiten Diode (D2) und des zweiten Leistungshalbleiterbauelements (V2) einen zweiten Anschluss (12) des modularen Schalters (10) bildet, wobei der modulare Schalter (10) einen Kondensator (C) aufweist, und wobei die erste Serienschaltung und die zweite Serienschaltung und der Kondensator (C) zueinander parallel geschaltet sind.

2. Frequenzumrichter (20) nach Anspruch 1, wobei der erste Stromrichter (23) eine Anzahl von Serienschaltungen (25) aufweist, die der Anzahl der Phasen des Energieversorgungsnetzes (21) entspricht, und wobei der zweite Stromrichter (24) eine Anzahl von Serienschaltungen (25) aufweist, die der Anzahl der Phasen des Antriebs (22) entspricht.

3. Frequenzumrichter (20) nach einem der Ansprüche 1 oder 2, wobei an dem Energieversorgungsnetz (21) eine Wechselspannung mit einer ersten Frequenz und an dem elektrischen Antrieb (22) eine Wechselspannung mit einer zweiten Frequenz anliegt.

4. Frequenzumrichter (20) nach einem der Ansprüche 1 bis 3, wobei der erste Stromrichter (23) und der zweite Stromrichter (24) über mindestens eine Zwischenkreisinduktivität (26, 27) miteinander verbunden sind.

5. Frequenzumrichter (20) nach einem der Ansprüche 1 oder 4, wobei der erste Stromrichter (23) über eine Induktivität (28) mit dem Energieversorgungsnetz (21) verbunden ist.

6. Elektrischer Frequenzumrichter (30) zur Kopplung eines elektrischen Transformators (31) mit einem elektrischen Antrieb (32), mit mindestens einem Gleichrichter (37) und einem Wechselrichter (33), wobei der Gleichrichter (37) mit dem Transformator (31) und der Wechselrichter (33) mit dem Antrieb (32) verbunden ist, wobei der Wechselrichter (24) mindestens zwei Serienschaltungen (34) aufweist, wobei jede der Serienschaltungen (34) mindestens zwei modulare Schalter (10) aufweist, wobei jeder der modularen Schalter (10) eine erste Serienschaltung bestehend aus einem ersten steuerbaren Leistungshalbleiterbauelement (V1) und einer ersten Diode (D1) und eine zweite Serienschaltung bestehend aus einer zweiten Diode (D2) und einem zweiten steuerbaren Leistungshalbleiterbauelement (V2) aufweist, wobei der Verbindungspunkt des ersten Leistungshalbleiterbauelements (V1) und der ersten Diode (D1) einen ersten Anschluss (11) und der Verbindungspunkt der zweiten Diode (D2) und des zweiten Leistungshalbleiterbauelements (V2) einen zweiten Anschluss (12) des modularen Schalters (10) bildet, wobei der modulare Schalter (10) einen Kondensator (C) aufweist, und wobei die erste Serienschaltung und die zweite Serienschaltung und der Kondensator (C) zueinander parallel geschaltet sind.

7. Frequenzumrichter (30) nach Anspruch 1, wobei die Anzahl der Serienschaltungen (34) der Anzahl der Phasen des Antriebs (32) entspricht.

8. Umrichter (30) nach einem der Ansprüche 6 oder 7, wobei der Transformator (31) und der Wechselrichter (33) über mindestens eine Zwischenkreisinduktivität (35, 36) miteinander verbunden sind.

9. Frequenzumrichter (30) nach einem der Ansprüche 6 bis 8, wobei an dem Transformator (31) eine Wechselspannung mit einer ersten Frequenz und an dem elektrischen Antrieb (32) eine Wechselspannung mit einer zweiten Frequenz anliegt.

10. Elektrischer Umrichter (40) zur Kopplung eines elektrischen Energieversorgungsnetzes (41) mit einer elektrischen Kompensation, mit einem Gleichrichter (43), der mit dem Energieversorgungsnetz (41) verbunden ist, sowie mit einer Induktivität (45), die mit dem Gleichrichter (43) verbunden ist, wobei der Gleichrichter (43) eine Anzahl von Serienschaltungen (44) aufweist, die der Anzahl der Phasen des Energieversorgungsnetzes (41) entspricht, wobei jede der Serienschaltungen (44) mindestens zwei modulare Schalter (10) aufweist, wobei jeder der modularen Schalter (10) eine erste Serienschaltung bestehend aus einem ersten steuerbaren Leistungshalbleiterbauelement (V1) und einer ersten Diode (D1) und eine zweite Serienschaltung bestehend aus einer zweiten Diode (D2) und einem zweiten steuerbaren Leistungshalbleiterbauelement (V2) aufweist, wobei der Verbindungspunkt des ersten Leistungshalbleiterbauelements (V1) und der ersten Diode (D1) einen ersten Anschluss (11) und der Verbindungspunkt der zweiten Diode (D2) und des zweiten Leistungshalbleiterbauelements (V2) einen zweiten Anschluss (12) des modularen Schalters (10) bildet, wobei der modulare Schalter (10) einen Kondensator (C) aufweist, und wobei die erste Serienschaltung und die zweite Serienschaltung und der Kondensator (C) zueinander parallel geschaltet sind.

11. Umrichter (40) nach Anspruch 10, wobei der Gleichrichter (43) über eine Induktivität (46) mit dem Energieversorgungsnetz (41) verbunden ist.

12. Elektrischer Netzkupplungsumrichter (50, 60) zur Kopplung eines ersten elektrischen Energieversorgungsnetzes (51, 61) mit einem zweiten Energieversorgungsnetz (52, 62), mit einem ersten Stromrichter (53, 63) und einem zweiten Stromrichter (54, 64), wobei der erste Stromrichter (53) mit dem ersten Energieversorgungsnetz (51, 61) und der zweite Stromrichter (54, 64) mit dem zweiten Energieversorgungsnetz (52, 62) verbunden ist, wobei jeder der beiden Stromrichter (53, 54, 63, 64) mindestens zwei Serienschaltungen (55, 65) aufweist, wobei jede der Serienschaltungen (55, 65) mindestens zwei modulare Schalter (10) aufweist, wobei jeder der modularen Schalter (10) eine erste Serienschaltung bestehend aus einem ersten steuerbaren Leistungshalbleiterbauelement (V1) und einer ersten Diode (D1) und eine zweite Serienschaltung bestehend aus einer zweiten Diode (D2) und einem zweiten steuerbaren Leistungshalbleiterbauelement (V2) aufweist, wobei der Verbindungspunkt des ersten Leistungshalbleiterbauelements (V1) und der ersten Diode (D1) einen ersten Anschluss (11) und der Verbindungspunkt der zweiten Diode (D2) und des zweiten Leistungshalbleiterbauelements (V2) einen zweiten Anschluss (12) des modularen Schalters (10) bildet, wobei der modulare Schalter (10) einen Kondensator (C) aufweist, und wobei die erste Serienschaltung und die zweite Serienschaltung und der Kondensator (C) zueinander parallel geschaltet sind.

13. Netzkupplungsumrichter (50, 60) nach Anspruch 12, wobei der erste Stromrichter (53, 63) eine Anzahl von Serienschaltungen (55, 65) aufweist, die der Anzahl der Phasen des ersten Energieversorgungsnetzes (51, 62) entspricht, und wobei der zweite Stromrichter (54, 64) eine Anzahl von Serienschaltungen (55, 65) aufweist, die der Anzahl der Phasen des zweiten Energieversorgungsnetzes (52, 62) entspricht.

14. Netzkupplungsumrichter (50) nach einem der Ansprüche 12 oder 13, wobei der erste Stromrichter (53) und der zweite Stromrichter (54) über mindestens eine Induktivität (56, 57) miteinander verbunden sind.

15. Netzkupplungsumrichter (60) nach einem der Ansprüche 12 oder 13, wobei der erste Stromrichter (63) und der zweite Stromrichter (64) über eine elektrische Leitung (71, 72) miteinander verbunden sind.

16. Netzkupplungsumrichter (60) nach Anspruch 15, wobei der Leitung (71, 72) mindestens eine Induktivität (66, 67, 68, 69) zugeordnet ist.
